# EUROPÄISCHE PATENTANMELDUNG

(11) **EP 3 246 467 A1**
(43) Veröffentlichungstag der Anmeldung: **22.11.2017**
(21) Anmeldenummer: 16170215.4
(22) Anmeldetag: 18.05.2016
(51) Int. Cl.: E01C 5/00, A01N 25/26, E01H 11/00

(54) **VERFAHREN UND FUGENFÜLLMATERIAL ZUR UNKRAUTBEKÄMPFUNG AUF GEPFLASTERTEN FLÄCHEN**

(71) Anmelder: Wehner, Daniel, 97797 Wartmannsroth (DE); Müller, Manfred, 97795 Schondra (DE)
(72) Erfinder: Wehner, Daniel, 97797 Wartmannsroth (DE)
(74) Vertreter: Pöhner, Wilfried Anton

(57) **Zusammenfassung**

Verfahren und Fugenfüllmaterial zur Unkrautbekämpfung auf gepflasterten Flächen mit Pflastersteinen (13) und dazwischen befindlichen Pflasterfugen (12), welche mit einem Fugenfüllmaterial (14) verfüllt sind, wobei zum Verfüllen der Pflasterfugen (12) ein mit einem herbizidal wirkenden Agens versetztes Fugenfüllmaterial (14) verwendet wird.

## Beschreibung

Die vorliegende Erfindung befasst sich mit einem Verfahren zur Unkrautbekämpfung auf gepflasterten Flächen mit Pflastersteinen und dazwischen befindlichen Pflasterfugen, welche mit einem Fugenfüllmaterial verfüllt sind.

Pflasterung ist eine seit alters her bekannte Methode, einen stabilen, regen- bzw. witterungsfesten Untergrund zu schaffen, in der ferneren Vergangenheit sogar für lange Zeit die einzig praktikable. In der nähren Vergangenheit traten zwar als Konkurrenz zur Pflasterung besonders im Straßenbau Alternativen wie Betonieren oder Asphaltieren in den Vordergrund, jedoch werden bei gewissen Anwendungen aus ästhetischen und auch praktischen Gründen nach wie vor Pflaster bevorzugt.

Zum Verlegen eines Pflasters wird üblicherweise zunächst die Oberschicht der zu pflasternden Fläche bis in eine gewisse Tiefe abgetragen, dann in der so entstandenen Vertiefung ein planes Bett aus Sand, Kies oder Speis geschaffen und darauf in der Regel so weit wie möglich lückenlos aneinanderstoßend Pflastersteine verlegt. Um einen festen Sitz der Pflastersteine zu gewährleisten werden die zwischen den Steinen unvermeidlich verbleibenden Fugen mit einem Füllmaterial geschlossen, wofür häufig ein feinkörniges granulares Material wie Sand, in der Regel Quartzsand, zum Einsatz kommt.

Eine gepflasterte Fläche, besonders eine Freifläche, wie einen Hof oder Garageneinfahrt, einen Parkplatz oder einen Gehweg, von Unkraut freizuhalten, ist nach dem Stand der Technik mit einigem Aufwand verbunden. Zu jeder Jahreszeit sprießen Unkräuter, hier als unerwünschte Vegetation verstanden, aus den Fugen zwischen den Pflastersteinen hervor und wurzeln dabei in dem zwischen den Pflastersteinen üblicherweise vorhandenen fugenfüllenden Sand- oder Erdmaterial. Im Frühjahr oder Sommer umfasst diese unerwünschte Vegetation vor allem Gräser und Kräuter, während im Winter besonders Moose und Flechten gute Wachstumsbedingungen vorfinden. Hierbei sind private Pflasterflächen besonders betroffen, denn dort ist üblicherweise die Verkehrs- bzw. Benutzungsintensität der Fläche geringer als auf öffentlichen Flächen, wo durch den normalen Fußgänger-, Rad- oder Autoverkehrs die Fläche natürlicherweise wenigstens an den am meisten benutzten Stellen von Unkraut freigehalten wird.

Des Weiteren sind frisch verlegte Pflaster zunächst nicht stark betroffen, da zu Beginn keine oder weitgehend keine Pflanzensamen vorhanden sind und der üblicherweise verwendete reine Fugensand auch sehr nährstoffarm ist, was ein Pflanzenwachstum behindert. Mit der Zeit sammeln sich jedoch sowohl Pflanzensamen als auch Nährstoffe in den Fugen an und sickern durch den Regen gelöst in die Fugen hinein, wo die Samen keimen, Wurzeln schlagen und schließlich Unkrautpflanzen aus den Fugen hervorsprießen.

Ein Entfernen dieses Unkrauts ist relativ aufwändig, denn jede einzelne Pflanze muss aus jeder einzelnen Fuge entweder von Hand ausgerissen oder mittels eines Werkzeugs wie einer Bürste entfernt werden. Alternativ oder zusätzlich können auch Herbizide angewendet werden, die entweder gezielt auf die Fugen aufgebracht oder ungezielt auf der gesamten Fläche verteilt werden können. In jedem Fall ist das Unkrautentfernen mit einigem Arbeitsaufwand verbunden. Die vorliegende Erfindung stellt sich vor diesem Hintergrund die Aufgabe, den Arbeitsaufwand zur Unkrautfreihaltung einer auch wenig verwendeten gepflasterten Fläche zu minimieren.

Diese Aufgabe wird gelöst durch das Verfahren mit den im unabhängigen Anspruch 1 angegebenen Merkmalen, dessen Kernidee darin besteht, dass schon beim Verlegen der Pflastersteine ein spezielles Fugenfüllmaterial mit herbizidaler Wirkung, insbesondere eines nach dem unabhängigen Anspruch 15, verwendet wird. Dieses ist häufig ein feinkörniges Granulat, es ist aber auch denkbar eine später aushärtende oder in sonstiger Weise seine Materialeigenschaften ändernde nicht granulare Substanz zu wählen. Das Fugenfüllmaterial könnte auch zunächst, d.h. während des Legens des Pflasters granular sein, und sich dann später mit der Zeit oder durch äußere Einflüsse wie Wässerung zu einer festeren, homogeneren Fugenfüllung verbinden.

,Herbizidales Agens' soll hier so verstanden sein, das im Gegensatz zu einem Herbizid eine Unkrautabtötende oder wachstumshemmende Wirkung noch nicht unmittelbar vorliegen muss, sondern auch erst nach einer chemischen Umwandlung wie sie im Rahmen natürlicher Witterungseinflüsse durch Sonnenstrahlung, Oxidation mit Luftsauerstoff oder Reaktionen mit im Regenwasser gelösten Substanzen auftreten kann. Somit umfasst der so definierte Begriff neben Herbiziden auch alle Substanzen die durch eben aufgeführte Prozesse in ein Herbizid überführt werden.

Das herbizidal wirkende Agens wird hierbei im Allgemeinen nicht rein verwendet, sondern einem Trägermaterial zugesetzt, welches dann in Form mehr oder weniger feiner Körner normalem Sand beigemischt wird. Es ist aber auch denkbar bei besonders starkem Unkrautwachstum einen Fugensand zu verwenden, der nur aus feinkörnigem herbizidalen Agens bzw. Trägermaterial mit Agens besteht.

Bei Wässerung der Fläche insbesondere durch Regen, löst sich dann das Herbizid aus dem Trägermaterial und wird von Samen oder Keimen in seinen Wurzeln der Unkrautpflanzen aufgenommen, so dass diese absterben bzw. zumindest am Wachsen gehindert wird.

Der Vorteil des hier offenbarten erfindungsgemäßen Verfahrens zur Unkrautbekämpfung liegt darin, dass mit einer einmaligen Gabe oder einem einmaligen Einbringen von herbizidal wirkendem Fugensand beim Verlegen des Pflasters dauerhaft oder zumindest über einen sehr langen Zeitraum hinweg ein Unkrautwachstum verhindert wird, und so ein signifikanter Arbeitsaufwand, der üblicherweise zur Unkrautbekämpfung der Pflasterflächen notwendig ist, vermieden wird.

Der Herbizideintrag sollte möglichst langsam erfolgen, so dass die Wirkung lange, d.h. im idealen Fall einige Jahre oder Jahrzehnte, anhält, andererseits muss natürlich die Eintragsdichte, also die pro Zeit und Fugenvolumen abgegebene Menge einen gewissen Mindestwert aufweisen, so dass eine herbizidale Wirkung gegeben ist. Zwischen diesen beiden Anforderungen ist hierbei so abzuwägen, dass ein geringstmöglicher mittlerer Eintrag gewählt wird, der noch einen bestimmten gewünschten unkrauthemmenden Effekt erzielt.

Dies kann unter Umständen dadurch realisiert werden, dass durch gezielte Beeinflussung des herbizidalen Anteils des Fugensandes ein Herbizideintrag eingestellt wird, bei dem sich Phasen höheren mit Phasen niedrigeren Eintrags abwechseln. Möglichkeiten einen solch alternierenden Verlauf zu erreichen, sind zum einen eine gezielte Beeinflussung der Korngröße des Sandes und weiterhin ein nichthomogener Aufbau der herbizidalen Sandkörner, z.B. aus mehreren Schichten die sich in ihrem Herbizidgehalt und/oder ihrer Abbaugeschwindigkeit unter dem Einfluss chemischer Witterung, insbesondere bei Wässerung durch Regen, unterscheiden.

Ein weiterer Grund, einen möglichst langsamen Herbizideintrag zu bevorzugen, ist, eine übermäßige Wasserbelastung zu vermeiden. Zusätzlich kann eine Umweltbelastung auch dadurch verringert werden, dass ein möglichst umweltverträgliches bzw. möglichst wenig umweltschädliches herbizidales Agens verwendet wird.

Vorteilhafte Weiterbildung des erfindungsgemäßen Verfahrens, die einzeln oder in Kombination realisierbar sind, sollen im Folgenden erläutert werden:
Als herbizidal wirkende Substanz bzw. herbizidal wirkendes Agens kommt bei dem erfindungsgemäßen Verfahren bzw. im erfindungsgemäßen Fugenfüllmaterial vorteilhafterweise besonders Kupfer in Frage und zwar entweder in reiner, also elementarer Form oder in Form einer Kupferverbindung wie ein Kupferoxid (CuxO), ein Kupfersulfid (CuxS) oder Kupfersulfat (CuSO₄). Hierbei ist in jedem Fall letzteres die aktive, d.h. die herbizidal wirkende Substanz, und die anderen Verbindungen inkl. Reinkupfer, werden erst durch chemische Reaktionen z.B. mit Luftsauerstoff oder mit im Regenwasser vorhandenem Schwefel und Schwefelsäure bzw. Schwefelsalzen in die herbizidal wirkende Form Kupfersulfat überführt.

Eine Ausführungsform des erfindungsgemäßen Verfahrens und des erfindungsgemäßen Fugenfüllmaterials empfiehlt, ein Herbizid nicht rein zu verwenden, sondern es in eine Trägersubstanz einzubetten.

Dies dient dazu, die Abgaberate des Herbizides zu verringern, so dass die Wirkdauer entsprechend verlängert und eine Umweltbelastung vermieden oder reduziert wird.
Als Trägersubstanz eignen sich insbesondere Kunststoffe verschiedener Härtegrade, da sie sich nur langsam zersetzen und so eine Wirkdauer von Jahren ermöglichen.
Falls er nicht schon herstellungsbedingt in granularer Form vorliegt, wird der mit einem Herbizid versetzte Kunststoff dann mehr oder weniger fein zerkleinert, also geschrotet, vermalen oder anderweitig zerrieben und dann in einem erfindungsgemäßen Fugenfüllmaterial entweder mit normalem Sand, also üblicherweise im Wesentlichen granularem Quarz (Siliziumdioxid SiO₂) mit Korngrößen von ca. 0,06 bis 2 Millimeter, gemischt oder auch exklusiv zum Verfugen des Pflasters eingesetzt. Dabei ist darauf zu achten, dass der Kunststoff bzw. das Trägermaterial nicht zu fein zerrieben wird und die durchschnittliche Formgröße des entstehenden Staubes nicht zu klein ist. Dies ist auch im Sinne einer möglichst langsamen Abgabe des Herbizides.

In dem granulären oder granularisierten herbizidalen Agens bzw. Trägermaterial mit herbizidalem Agens des im erfindungsgemäßen Verfahren verwendeten Fugensandes, insbesondere eines erfindungsgemäßen Fugensandes, sind nicht alle Körner gleich groß, d.h. nicht alle haben eine Größe, die dem Durchschnitt entspricht, sondern es ergibt sich eine gewisse statistische Verteilung der Korngrößen. Der zeitliche Verlauf des Herbizideintrags hängt nun entscheidend von dieser Korngrößenverteilung ab. Sind die Körner homogen aufgebaut und variieren wenig in ihrer Form, so ist die Korngrößenverteilung die alleinig eintragsbestimmende Eigenschaft für den Herbizideintrag. Es gilt: je mehr kleine Körner bei gegebenem Gesamtvolumen vorhanden sind, desto höher ist der anfängliche und desto niedriger die dauerhafte Abgaberate und damit die Wirkdauer und umgekehrt bei einer großen Zahl an sehr großvolumigen Körnern bei gegebenem Gesamtvolumen ergibt sich ein zu Beginn geringerer aber später erhöhter Herbizideintrag und eine längere Wirkdauer. Dadurch ist es also möglich durch gezieltes Einstellen einer bestimmten Korngrößenverteilung einen gewollten zeitlichen Verlauf des Herbizideintrages zu erreichen. Denkbar ist zum einen, dass ein möglichst konstanter zeitlicher Verlauf erreicht werden soll, oder aber ein zeitlicher Verlauf in dem grob zwei Phasen vorhanden sind, nämlich einen anfängliche mit einem niedrigeren sich langsam erhöhenden Herbizideintrag und eine zweite spätere, bei der der Herbizideintrag höher aber zeitlich konstant ist. Letzterer zweiphasiger zeitlicher Verlauf ist deswegen denkbar sinnvoll, da wie oben beschrieben in einem frisch verlegten Pflaster natürlicherweise zu Beginn wenig Unkraut wächst.

Es ist auch denkbar, die Zahl der Herbizideintragsphasen noch weiter zu erhöhen, etwa um die Menge des abgegebenen Herbizids an einen saisonalen Wachstumsrhythmus anzupassen. Dabei würden auf kürzere Phasen eines erhöhten Eintrags, während derer Unkraut abgetötet wird, längere Phasen geringeren Eintrags, bei dem die abgegebene Dosis gerade ausreicht, ein Unkrautwachstum zu unterdrücken.
Umsetzbar wäre ein solcher alternierender Verlauf entweder durch eine entsprechende mehrere Maxima und Minima aufweisende Korngrößenverteilung oder durch Verwendung von herbizidalen Körnern, bei denen das Herbizid nicht homogen verteilt ist, sondern ein Schichtaufbau besteht wobei sich schneller verwitternde mit langsamer verwitternden Schichten und/oder herbizidhaltigere mit herbizidärmeren Schichten abwechseln.

Eine weitere bevorzugte Ausführungsform des erfindungsgemäßen Verfahrens und Fugenfüllmaterials setzt vorteilhafterweise zum Erreichen einer breiteren Wirkung und einer höheren Effektivität mehr als ein Herbizid ein. Dabei ist darauf zu achten, dass alle eingesetzten Herbizide möglichst umweltschonend bzw. dass sie möglichst wenig umweltschädlich sind, besonders was eine Belastung des Grundwassers angeht.

Weitere Merkmale, Eigenschaften und Vorteile des erfindungsgemäßen Verfahrens ergeben sich aus dem im Folgenden anhand der Abbildung erläuterten bevorzugten Ausführungsform.
Diese dienen nur der Illustration und sollen die vorliegende Erfindung in keiner Weise in ihrer Allgemeinheit einschränken.

Im Einzelnen zeigen:
- Figur 1:: Eine Draufsicht auf ein Pflaster, bei dem erfindungsgemäß zum Verfugen ein herbizidal wirkender Sand eingesetzt wird.
- Figur 2:: Schnitt durch ein Korn eines im erfindungsgemäßen Verfahren eingesetzten erfindungsgemäßen Fugensandes, welches ein herbizidal wirkendes Agens enthält.
- Figur 3:: Schnitte durch zwei Ausführungsform im erfindungsgemäßen Verfahren eingesetzter Fugensandkörner

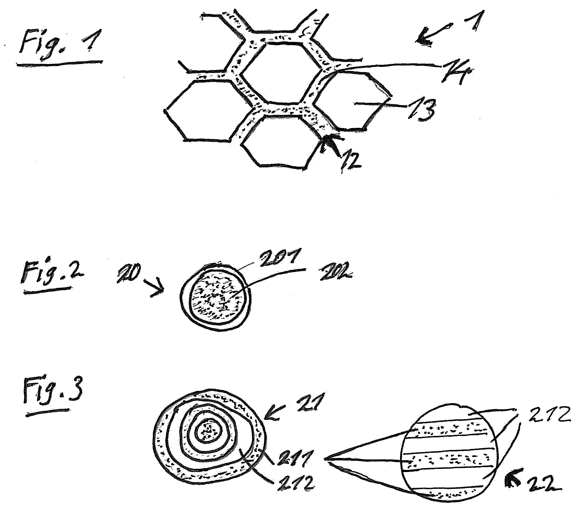

Figur 1 zeigt in Draufsicht ein mittels des erfindungsgemäßen Verfahrens unkrautresistent gemachtes Pflaster 1 bestehend aus mehr oder weniger regelmäßig verlegten Pflastersteinen 13 und dazwischen frei bleibenden Fugen 14, welche mit einem Füllmaterial in Form eines feinkörnigen Sandes 12 verfüllt sind, wodurch die Steine in allgemein bekannter Weise gegen Verlagerung stabilisiert sind.

Der Fugensand 12 enthält zumindest teilweise Körner einer mit einem herbizidal wirkenden Agens, insbesondere einer Kupferverbindung versetzten Trägersubstanz, insbesondere einem Kunststoff. Unter dem Einfluss der Witterung, d.h. Regen, Temperaturschwankungen sowie chemischer Korrosion, zersetzt sich die Trägersubstanzkörner und geben nach und nach das Herbizid frei, welches sich im Wasser löst und von Samen und Wurzeln eventuell vorhandenen Unkrauts aufgenommen wird, wodurch dieses abstirbt oder am Wachstum gehindert wird.

Figuren 2 und 3 zeigen Schnitte durch verschiedene im erfindungsgemäßen Verfahren einsetzbare herbizidale Körner.
Bei dem in Figur 2 gezeigten Korn 20 ist eine herbizidhaltige Trägersubstanz 202 mit einer nicht-herbizidhaltigen Umhüllung 201 versehen, so das eine Herbizidabgabe erst einige Zeit nach dem Verlegen des Pflasters einsetzt, was sinnvoll ist, da ein frisch verlegtes Pflaster zunächst noch kein Unkrautwachstum zeigt.
Die in Figur 3 gezeigten Körner 21 und 22 erweitert dieses Prinzip auf einen mehrschichtigen Aufbau bei dem sich herbizidhaltige mit herbizidärmeren Schichten abwechseln und so ein zeitlicher Verlauf des Herbizideintrags erreicht wird, bei dem sich Phasen erhöhten Eintrags zur aktiven Unkrautvernichtung mit Phasen niedrigeren Eintrags zur reinen Wachstumshemmung alternieren.

### Bezugszeichenliste

- 1: Pflaster
- 12: Pflasterfuge
- 13: Pflasterstein
- 14: herbizidaler Fugensand
- 20: Korn eines herbizidalen Fugensandes
- 201: nicht herbizidhaltige Außenschicht
- 202: herbizidhaltiges Inneres
- 21: herbizidales Korn mit mehreren konzentrischen Schichten
- 22: herbizidales Korn mit mehreren planen Schichten
- 211: herbizidhaltige Schicht
- 212: herbizidarme Schicht

## Patentansprüche

1. Verfahren zur Unkrautbekämpfung auf gepflasterten Flächen mit Pflastersteinen (13) und dazwischen befindlichen Pflasterfugen (12), welche mit einem Fugenfüllmaterial (14) verfüllt sind, **dadurch gekennzeichnet, dass**
zum Verfüllen der Pflasterfugen (12) ein mit einem herbizidal wirkenden Agens versetztes Fugenfüllmaterial (14) verwendet wird.

2. Verfahren nach Anspruch 1, **dadurch gekennzeichnet, dass** ein granulares Fugenfüllmaterial (14) verwendet wird.

3. Verfahren nach Anspruch 1 oder 2, **dadurch gekennzeichnet, dass** als herbizidal wirkendes Agens des Fugenfüllmaterials (14) Kupfer oder eine Kupferverbindung verwendet wird.

4. Verfahren nach einem der vorhergehenden Ansprüche, **dadurch gekennzeichnet, dass** das Agens einer Trägersubstanz beigemischt wird.

5. Verfahren nach dem vorhergehenden Anspruch, **dadurch gekennzeichnet, dass** als Trägersubstanz ein Kunststoff verwendet wird.

6. Verfahren nach einem der vorhergehenden Ansprüche, **dadurch gekennzeichnet, dass** ein aus einer Mischung von Sand, im Wesentlichen Quartzsand, und granularem herbizidalen Agens bzw. einer granulären Trägersubstanz mit darin enthaltenem herbizidalen Agens bestehendes Fugenfüllmaterial (14) verwendet wird.

7. Verfahren nach einem der vorhergehenden Ansprüche, **dadurch gekennzeichnet, dass** ein rein aus granularem herbizidalen Agens bzw. einer granulären Trägersubstanz mit darin enthaltenem herbizidalen Agens bestehendes Fugenfüllmaterial (14) verwendet wird.

8. Verfahren nach einem der vorhergehenden Ansprüche, **dadurch gekennzeichnet, dass** ein granulares, herbizidale Agenzien enthaltendes Fugenfüllmaterial (14) mit einer Partikelgröße, die der üblichen Quarzsandes entspricht, verwendet wird.

9. Verfahren nach Anspruch 5, **dadurch gekennzeichnet, dass** eine Korngrößenverteilung des granulären Fugenfüllmaterials (14) mit herbizidalem Agens so angepasst wird, dass ein gewünschter zeitlicher Verlauf eines Herbizideintrags erreicht wird.

10. Verfahren nach Anspruch 9, **dadurch gekennzeichnet, dass** ein möglichst zeitlich konstanter Herbizideintrag erreicht wird.

11. Verfahren nach Anspruch 9, **dadurch gekennzeichnet, dass** ein zeitlicher Verlauf des Herbizideintrages mit einer ersten Phase niedrigerem aber steigendem Eintrages und einer zweiten Phase mit höherem konstantem Eintrag eingestellt wird.

12. Verfahren nach Anspruch 10, **dadurch gekennzeichnet, dass** ein aus mit herbizidfreien oder herbizidarmen Substanzen umhüllten Körnern bestehendes granulares Fugenfüllmaterial (14) verwendet wird.

13. Verfahren nach einem der vorhergehenden Ansprüche, **dadurch gekennzeichnet, dass** mehr als ein herbizidal wirkendes Agens eingesetzt wird.

14. Verfahren nach einem der vorhergehenden Ansprüche, **dadurch gekennzeichnet, dass** ein möglichst wenig umweltschädliches herbizidales Agens eingesetzt wird.

15. Fugenfüllmaterial (14) in granularer Form zur Verwendung im Verfahren nach einem der Ansprüche 1-14,
**dadurch gekennzeichnet, dass**
in den Körnern des granulären Fugenfüllmaterials (14) ein herbizidales Agens enthalten ist.

16. Fugenfüllmaterial nach Anspruch 15, **dadurch gekennzeichnet, dass** das herbizidale Agens Kupfer oder eine Kupferverbindung, insbesondere ein Kupferoxid (CuO, Cu₂O), ein Kupfersulfid (CuS, Cu₂S) oder Kupfersulfat (CuSO₄) ist.

17. Fugenfüllmaterial nach Anspruch 15 oder 16, **dadurch gekennzeichnet, dass** das herbizidale Agens in eine Trägersubstanz eingebettet ist.

18. Fugenfüllmaterial nach Anspruch 17, **dadurch gekennzeichnet, dass** das Trägermaterial ein Kunststoff ist.

19. Fugenfüllmaterial nach einem der Ansprüche 15-18, **dadurch gekennzeichnet, dass** das herbizidale Agens im Wesentlichen homogen in den Körnern verteilt ist.

20. Fugenfüllmaterial nach einem der Ansprüche 15-18, **dadurch gekennzeichnet, dass** die Körner aus zwei oder mehr Schichten aufgebaut sind, die sich in ihrem Gehalt an herbizidalem Agens und oder ihrer Witterungsbeständigkeit unterscheiden.

21. Fugenfüllmaterial nach einem der Ansprüche 15-20, **dadurch gekennzeichnet, dass** zur Beeinflussung eines zeitlichen Verlaufs eines Herbizideintrages eine Korngrößenverteilung des granulären Füllmaterials (14) gezielt eingestellt ist.

22. Fugenfüllmaterial nach Anspruch 22, **dadurch gekennzeichnet, dass** ein Korngrößenverteilung so eingestellt ist, dass der Herbizideintrag möglichst zeitlich konstant ist.

23. Fugenfüllmaterial nach Anspruch 22, **dadurch gekennzeichnet, dass** ein Korngrößenverteilung so eingestellt ist, dass der zeitliche Verlauf des Herbizideintrag eine anfängliche Phase niedrigeren Eintrags und eine spätere Phase höheren Eintrags aufweist.

24. Fugenfüllmaterial nach Anspruch 22, **dadurch gekennzeichnet, dass** ein Korngrößenverteilung so eingestellt ist, dass der zeitliche Verlauf des Herbizideintrags alternierende Phasen höheren und niedrigeren Eintrags aufweist.
